(19) Europäisches Patentamt

European Patent Office

Office européen des brevets

(11) **EP 1 613 024 A1**

(12) **EUROPEAN PATENT APPLICATION**

(43) Date of publication:
**04.01.2006 Bulletin 2006/01**

(51) Int Cl.:
*H04L 29/12* (2006.01)    *H04L 29/06* (2006.01)

(21) Application number: **04291647.8**

(22) Date of filing: **29.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **ALCATEL**
**75008 Paris (FR)**

(72) Inventors:
• **Oberle, Karsten**
  **68199 Mannheim (DE)**

• **Tomsu, Marco**
  **71254 Ditzingen (DE)**

(74) Representative: **Wörz, Volker Alfred et al**
**Dreiss, Fuhlendorf,**
**Steimle & Becker,**
**Postfach 10 37 62**
**70032 Stuttgart (DE)**

Remarks:
Amended claims in accordance with Rule 86 (2) EPC.

(54) **Method and call server for establishing a bidirectional peer-to-peer communication link**

(57)    The present invention refers to a call server (PS1; PS2) for establishing a bi-directional peer-to-peer communication link between at least two user agents (UA1, UA2) within a call-based environment by means of signaling messages (100) to be exchanged between the at least two user agents (UA1, UA2). The communication link is established across a network via at least one network address translation device (NAT1, NAT2), which is adapted for translating private identifiers of the user agents (UA1, UA2) into corresponding public identifiers usable in the network and vice versa. In order to allow build-up of the communication-link by means of signaling messages (100) via network address translation devices (NAT1, NAT2), it is suggested that the call servers (PS1; PS2) have an additional functionality for exploring translation information for the at least one network address translation device (NAT1, NAT2). This is done by exchanging explore messages between the call servers (PS1, PS2) via the at least one network address translation device (NAT1, NAT2). The explore messages are received by the call servers (PS1, PS2) and the transformation performed on the content of the explore messages by the network address translation device (NAT1, NAT2) is analyzed and the translation information is derived therefrom.

Fig. 1

## Description

The present invention refers to a method for establishing a bi-directional peer-to-peer communication link between at least two user agents within a call-based environment. The setup of the communication link is established by means of signaling messages to be exchanged between the at least two user agents before establishing the communication link. The call-based environment comprises a network, the at least two user agents each connected to the network via a network address translation device and at least two call servers each connected to at least one of the user agents.

A network address translation device is used for translating a private identifier of an User Agent into a public identifier or for translating a public identifier into a private identifier. The private identifier is used only within a private domain comprising the User Agent, the call server and the network address translation device and cannot be routed and addressed through public networks. The public identifier is used in the public domain and can be routed and addressed through public as well as private networks. For example, the identifiers comprise an Internet Protocol (IP)-Address and a User Datagram Protocol (UDP)-port. The public domains only have a restricted number of public identifiers. By translating the identifiers one public identifier can be used for a number of private identifiers. Hence, a network address translation device allows the connection operation of a higher number of user agents to the public network.

The present invention can be used for Voice over Internet Protocol (VoIP)- and Next Generation Network (NGN)-Systems using the Session Initiation Protocol (SIP) for the setup of bi-directional peer-to-peer communication links with interposed Firewalls and Network Address (and Port) Translation devices, below referred to as FW/NA(P)T-devices. The communication links can be used for transmitting voice data and/ or any kind of multi-media data.

In the state of the art, for the setup of a bi-directional User Datagram Protocol (UDP)-based peer-to-peer communication link, for example, SIP-messages are used. These SIP-messages for their part are transported using UDP-packets. In their so-called Session Description Protocol (SDP) descriptors, these SIP-messages contain information about the calling device, i.e. the device that initiated the setup of the communication link, (User Agent Client, UAC) and about the receiving device, i.e. the recipient of the communication link (User Agent Server, UAS), describing the used Internet Protocol (IP)-addresses and User Datagram Protocol (UDP)-ports for the Real-Time Transport Protocol (RTP)-media flows.

For terminals located in private IP-realms behind a commonly used device with "Firewall" and "Network Address (and Port) Translation" functionality, below referred to as FW/NA(P)T-functionality, the addresses given in the SDP description are normally private or local addresses, i.e. not publicly addressable. These private addresses cannot be tracked and used by corresponding call servers on the other side of the FW/NA(P)T-device.

Because common standard FW/NA(P)T-devices at the border between private and public IP-realms operate on Open Systems Interconnection (OSI) layer 3 and/or 4 only, they are not aware of SIP/ SDP-parameters, which are contained in the UDP payload. This means, the FW/NA(P)T-devices only translate addresses and ports in the UDP/ IP-header. By leaving the IP-addresses and UDP-ports within the SIP/ SDP-messages unchanged, a FW/NA(P)T-device generates the problem that UAC and UAS exchange private IP-addresses/ UDP-ports for the RTP-media session, which are not addressable or routable through public IP-networks.

To solve this problem, a terminal in a private network behind a FW/NA(P)T-device needs to get the information, how the local or private IP-address and the UDP-port he wants to use for an RTP-connection is mapped/ bound by the FW/NA(P)T-device to a public IP-address and/or UDP-port. For the setup of a bi-directional peer-to-peer communication, this public IP-address and UDP-port must then be used in the SIP/ SDP-message.

There are some approaches known in the art for solving that problem. One possible solution is referred to as Traversal Using Relay Network Address Translation (TURN). Another possible solution is referred to as Simple Traversal of User Datagram Protocol (STUN). Both TURN and STUN have been presented by the Internet Engineering Task Force (IETF). However, these solutions require the installation of additional hardware/ servers in the public IP-domain. Additional special, standardized, and parameterized intelligence is required in the user agents (e.g. SIP-phones) for exploration of the NA(P)T-binding information of the IP/ UDP. The solution based on TURN is hardly scalable because all signaling and media traffic has to pass through one single server. Furthermore, the known solutions can cover only part of the vast NA(P)T-functionality, which, for example, can be "Full Cone NAT", "Restricted Cone NAT", "Port Restricted Cone NAT", "Symmetric NAT", etc.

Moreover, other solutions are suggested in the art for controlling the FW/NA(P)T-devices by an application layer entity using control interfaces and protocols like MEGACO, MIDCOM, FCP, UpnP, etc. However, these solutions require on the one hand an upgrade or exchange of a large number of already installed FW/NA(P)T-devices, and on the other hand the installation of centralized or decentralized control entities.

Therefore, it is an object of the present invention to provide SIP-awareness for FW/NA(P)T-devices disposed between a private domain and a public domain of a call-based environment.

This object is solved by a method of the above-mentioned kind, characterized in that before the communication link between the user agents is established, explore messages are exchanged between the call servers via the FW/NA(P)T-devices. The user agents are connected to the public network via the FW/NA(P)T-devices and also directly connected to their respective call servers. Translation information of the FW/NA(P)T-devices is extracted from the explore messages. The content of the signaling messages is modified according to the translation information. Finally, the communication link is established by means of the modified signaling messages.

According to the present invention, the intelligence for acquiring the NA(P)T-binding information is located in the call servers. That has the advantage, that user agents (e.g. IP-phone, SIP-phone, etc.) and the FW/NA(P)T-devices of the call-based environment can remain unchanged and that additional devices are not required. Only the call servers have to be adapted slightly in order to send explore messages and to modify signaling messages.

Advantageous embodiments of the invention can be taken from the depending claims.

The present invention can be used for a Network Address (and Port) Translation (NA(P)T) traversal in a Session Initiation Protocol (SIP) environment. The invention provides a method to explore NA(P)T-binding information of common FW/NA(P)T-devices by extending the functionality of the call servers (e.g. SIP proxy servers)., which are involved in the call setup anyway. Exploration of all NA(P)T-bindings along the media path is done by one, two or more involved SIP proxy servers, which are located in the various IP realms (private UAC realm, private UAS realm, private NAP realm, public realm, etc.).

Taking a short break during a session initiation or a call setup with SIP/ SDP-messages, the involved SIP proxy servers start the exploration by exchanging special UDP messages (which could be in the SIP-format), pretending to be the user agent by faking the IP source Address (IP-SA) and UDP source port (UDP-SP). SA and SP are the private IP-addresses and UDP ports to the User Agents, for which the NA(P)T-bindings have to be explored. Faking the UDP-packet's source address and port is no legal problem due to the fact that it takes place within a private IP-domain.

The SIP proxy servers also have knowledge about their public IP addresses (by the Domain Name Service, DNS, where they have to register anyway), and about the existence of NA(P)T-functionality within the media path and the necessity of exploration of NA(P)T-bindings. Of course, the FW/NA(P)T-device must be enabled to forward UDP-messages sent from outside (inbound) at an assigned default SIP-signaling port (e.g. port 5060) to SIP proxy server in a private IP-realm.

After exploration of the binding information for each FW/NA(P)T-device along the media path, the SIP proxy server finishes the SIP call setup procedure. All SIP/ SDP-parameters are replaced with the correct IP-addresses/ UDP-ports as seen from the corresponding User Agent on the other side of the FW/NA(P)T-device(s).

The present invention provides a method to explore NA(P)T-transformation information (bindings) of common Standard FW/NA(P)T-devices. Operating at the border between private and public IP realms on OSI layer 3 and/or 4 only, the Standard FW/NA(P)T-devices are not aware of SIP/ SDP-parameters, which are contained in the UDP payload. Therefore, a call server in a private network behind the FW/NA(P)T-device gets the information, how the local IP-address and UDP-port the user agent wants to use for an RTP-connection, are mapped/ bound by the FW/NA(P)T-device to a public IP-address and UDP-port, in order to use this public IP-addresses and UDP-ports in the SDP-descriptor part of the SIP messaging for setup of a bi-directional peer-to-peer communication.

Exploration of NA(P)T-bindings is done by using SIP proxy servers in private domains. These SIP proxy servers have to be able to create UDP-messages, which could be in the SIP-format, with faked IP source address and UDP source port (SA/ SP) between each other. These UDP-messages are transported by the SIP-proxy servers via the FW/NA(P)T-device, where they are modified This means, SA and SP of the created messages have to be the local or private IP addresses and UDP ports of that user agent, for which the NA(P)T-bindings have to be explored. The SIP proxy servers have knowledge about their public IP addresses, which they can receive, e.g. from the public DNS-server, where they have to be registered anyway. With this information the SIP proxy servers also have knowledge about the existence of FW/NA(P)T-functionality within the media path and the necessity of exploration of NA(P)T-bindings.

Of course, the FW/NA(P)T-device must be able to forward UDP-messages sent from outside (inbound) at an assigned default SIP signaling port (e.g. port 5060) to SIP proxy server in private IP realms.

The method to explore NA(P)T-bindings according to the present invention also works for cascaded FW/NA(P)T-devices.

Further advantages and preferred embodiments of the invention are shown in the drawings and are explained in detail hereinafter making reference to the drawings. Of course, the present invention is not restricted to the preferred embodiments shown in the drawings.

Figure 1     shows a block diagram of a call-based environment for realizing the method according to a first preferred embodiment of the present invention;

Figure 2     shows a block diagram of a call-based environment for realizing the method according to a second preferred embodiment of the present invention; and

Figure 3     shows a signaling message, which may be used for initiating a bi-directional peer-to-peer communication link in the call-based environment of figure 2 or 3.

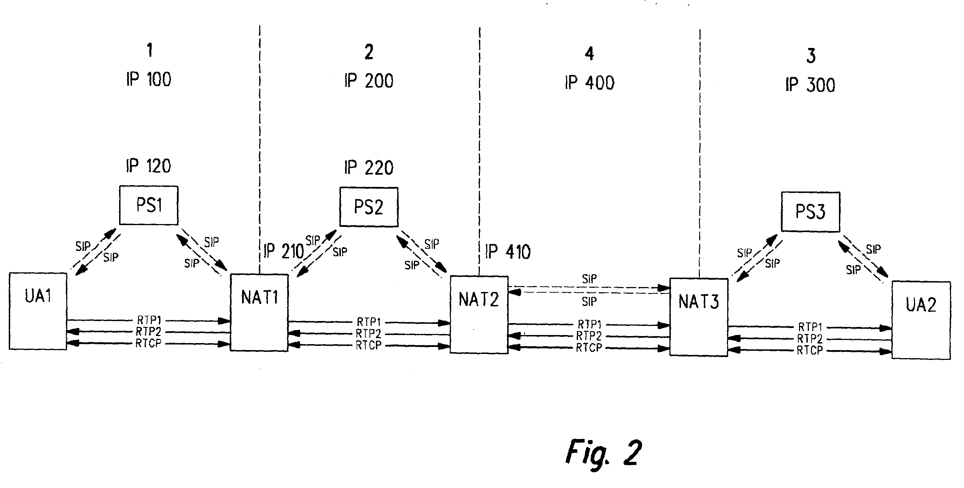

In the figures, a first private domain has the reference number 1, a second private domain has the reference number 2, a third private domain (see figure 2) has the reference number 3 and a public domain has the reference number 4. The public domain is, for example, an IP-domain. All domains are, for example, IP-domains. The public domain 4 comprises a network, for example an IP-network.

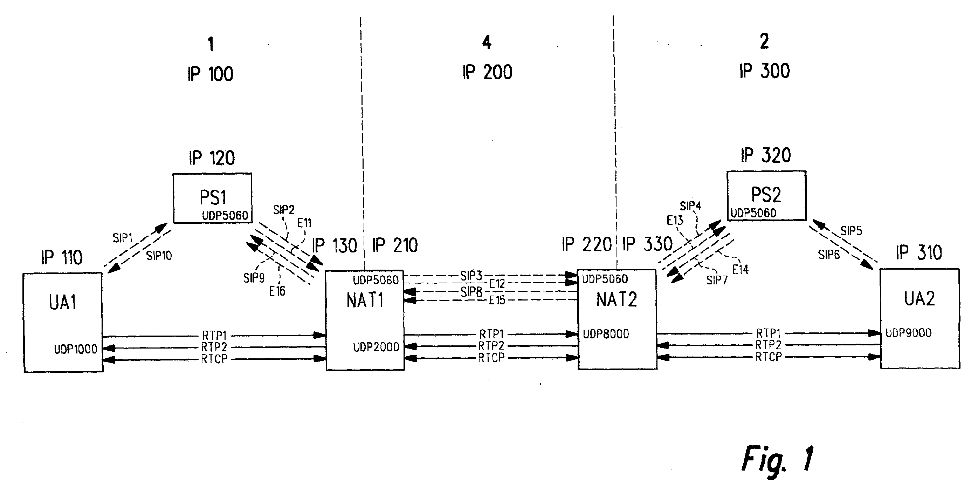

Referring to figure 1, a first user agent UA1 wants to initiate a peer-to-peer communication link to a second user agent UA2. The first user agent UA1 transmits a first signaling message "INVITE" to a first network or proxy server PS1 (SIP1 in the example shown in the figure 1). This message includes a Session Description Protocol (SDP) with a local or private identification (Internet Protocol (IP) address and User Datagram Protocol (UDP) port) of the first user agent UA1. In the example given, the identification is an IP address IP110 and a UDP port UDP1000. This is where the first user agent UA1 is listening or waiting for Real-Time Transport Protocol (RTP)-traffic (RTP2 in the figure 1) from a second user agent UA2. The identification of the first user agent UA1 is also referred to as an SDP descriptor.

The first call server PS1 removes the SDP descriptor, stores it and forwards the first signaling message "INVITE" without the SDP descriptor via a first Network Address (and Port) Translation device (NA(P)T1), the network, a second Network Address (and Port) Translation device (NA(P)T2), a second call or proxy server PS2 to a second user agent UA2 (SIP2, SIP3, SIP4, SIP5 in the figure 1). In the figures, the FW/NA(P)T-devices are referred to as NAT1, NAT2 and NAT3 (see figure 2).

The second user agent UA2 receives the first signaling message "INVITE" (SIP5) and sends a second signaling message "200OK" comprising a private or local identification or SDP descriptor of the second user agent UA2. The second signaling message "200OK" is a response to the first message "INVITE". The SDP descriptor contains the private identification of the second user agent, i.e. a second IP address (IP310) and a second UDP port (UDP9000). This is where the second user agent UA2 is listening or waiting for RTP-traffic (RTP1) from the first user agent UA1. The second signaling message "200OK" is sent from the second user agent UA2 to the second call server PS2 (SIP6 in the figure 1), via the second FW/NA(P)T-device NA(P)T2, the network, the first FW/NA(P)T-device NA(P)T1 to the first call server PS1 (SIP7, SIP8, SIP9 in the figure 1).

The first call server PS1 intercepts forwarding of the second signaling message "200OK" after receiving the message (SIP9). This is the point where according to a preferred embodiment of the present invention the NA(P)T-bindings.are explored by the call servers PS1 and PS2. For exploring the NA(P)T-bindings the call servers PS1 and PS2 exchange so-called explore messages. Below the exploration of the NA(P)T-bindings is described in more detail for two unidirectional Real-Time Transport Protocol (RTP)-media channels (RT21 and RTP2).

The exploration is accomplished using special signaling (UDP) messages, for example in the SIP-format, which are exchanged between the two call servers (PS1 and PS2). The explore messages contain information concerning the source of the call in terms of IP-source address (IP-SA) and UDP-source port (UDP-SP). Instead of the source information of the call servers (PS1 and PS2), which send the explore messages, the call servers (PS1 and PS2) insert the source information of the first and second user agents (UA1 and UA2) respectively into the explore messages. Further, the explore messages contain information concerning the user agent to be called and the corresponding SIP-proxy, respectively, in terms of IP-destination address (IP-DA) and UDP-destination port (UDP-DP). The source and destination information is contained in the IP-header of the explore messages. The source information (IP-SA, UDP-SP) is also contained in the payload (SDP of the explore message).

A first explore message is sent from the first call server PS1 to the first FW/NA(P)T-device NA(P)T1 (E11 in the figure 1). The first call server PS1 fakes the source address (SA) and the source port (SP) contained in the explore message in such a way, that instead of referring to the first call server PS1 (which actually sends the explore message), they refer to the first user agent UA1. For the example shown in the figure 1, the IP-SA in that message is IP110 and the IP-SP is UDP1000, corresponding to the private or local identification of the first user agent UA1. The payload of that message comprises a SIP-message containing the private identification of the first user agent UA1.

The first FW/NA(P)T-device NA(P)T1 receives the first explore message and translates the IP-SA and the IP-SP from the private identification into the public identification of the first user agent UA1, which in the example would be IP210 and UDP2000. This is a dynamic binding created with the first passing of the UDP-data packet. The destination address (IP-DA), the destination port (UDP-DP) and the payload remain unaffected from the translation. Hence, the payload of the message still contains the SIP-message with the private identification of the first user agent UA1. Then, the translated message is transmitted to the second FW/NA(P)T-device NA(P)T2 via the network (E12 in the figure 1).

The second FW/NA(P)T-device NA(P)T2 receives the translated first explore message and translates the IP-DA and the IP-DP into the private or local identification of the second user agent UA2 and the corresponding SIP-proxy respectively, which in the example would be IP320 and UDP5060. The source address (IP-SA), the source port (UDP-SP) and the payload remain unaffected from the translation. Hence, the payload of the message still contains the SIP-message with the private identification of the first user agent UA1. Then, the message is transmitted to the second call server PS2 (E13 in the figure 1).

Receiving the message (E13) or the data packet respectively, the second call server PS2 will extract the NA(P)T-binding information for the first FW/NA(P)T-device NA(P)T1 contained therein:

$$NA(P)T1: \quad IP110/ \ UDP1000 \ <-> \ IP210/ \ UDP2000$$

This means, sending RTP data packets (RTP2) to the public IP address/ port IP210/ UDP2000 at the first FW/NA(P)T-device NA(P)T1 will be forwarded to the first user agent UA1 at IP110/ UDP1000.

A second explore message is sent from the second call server PS2 to the second FW/NA(P)T-device NA(P)T2 (E14 in the figure 1). The second call server PS2 fakes the source address (SA) and the source port (SP) contained in the explore message in such a way, that instead of referring to the second call server PS2 (which actually sends the explore message), they refer to the second user agent UA2. For the example shown in the figure 1, the IP-SA in that message is IP310 and the IP-SP is UDP9000, corresponding to the private or local identification of the second user agent UA2. The payload of that message comprises a SIP-message containing the private identification of the second user agent UA2.

The second FW/NA(P)T-device NA(P)T2 receives the second explore message and translates the IP-SA and the IP-SP from the private identification into the public identification of the second user agent UA2, which in the example would be IP220 and UDP8000. This is a dynamic binding created with the first passing of the UDP-data packet. The destination address (IP-DA), the destination port (UDP-DP) and the payload remain unaffected from the translation. Hence, the payload of the message still contains the SIP-message with the private identification of the second user agent UA2. Then, the translated message is transmitted to the first FW/NA(P)T-device NA(P)T1 via the network (E15 in the figure 1).

The first FW/NA(P)T-device NA(P)T1 receives the translated second explore message and translates the IP-DA and the IP-DP into the private or local identification of the first user agent UA1 and the corresponding SIP-proxy respectively, which in the example would be IP120 and UDP5060. The source address (IP-SA), the source port (UDP-SP) and the payload remain unaffected from the translation. Hence, the payload of the message still contains the SIP-message with the private identification of the second user agent UA2. Then, the message is transmitted to the first call server PS1 (E16 in the figure 1).

Receiving the message (E16) or the data packet respectively, the first call server PS1 will extract the NA(P)T-binding information for the second FW/NA(P)T-device NA(P)T2 contained therein:

$$NA(P)T2: \quad IP310/ \ UDP9000 \ <-> \ IP220/ \ UDP8000$$

This means, sending RTP data packets (RTP1) to the public IP address/ port IP220/ UDP8000 at the second FW/NA(P)T-device NA(P)T2 will be forwarded to the second user agent UA2 at IP310/ UDP9000.

Accordingly, after exchange of the explore messages, the first call server PS1 has the binding-information of the second FW/NA(P)T-device NA(P)T2 and the second call server PS2 has the binding-information of the first FW/NA(P)T-device NA(P)T1. This information can be used by the call servers PS1 and PS2 to replace the private or local information of the user agents UA1 and UA2 contained in the signaling messages with the corresponding public information. By doing so, the signaling messages, which now contain the public information of the transmitting user agent UA1 and UA2, can be understood and properly interpreted by the receiving call server PS2 and PS1.

Continuing with the first call server PS1 intercepting the forwarding of the second signaling message "2000K" after receiving the message (SIP9), the first call server PS1 replaces the private or local information of the second user agent UA2, i.e. the private SDP, (IP310/ UDP9000) in the received signaling message "200OK" (SIP9) with the public information, i.e. the public SDP, for the second user agent UA2 (IP220/ UDP8000) and sends the message with the public SDP to the first user agent UA1 (SIP10 in the figure 1).

The first user agent UA1 sends a further signaling message "ACK" (acknowledge for the second signaling message "2000K") via the first and second call server PS1 and PS2 to the second user agent UA2.

The first call server PS1 intercepts the further signaling message "ACK" and inserts the private SDP descriptor (IP110/ UDP1000) of the first user agent UA1, which - as described above - was previously stored after having received the first signaling message "INVITE" from the first user agent UA1 (SIP1 in the figure 1). The private SDP descriptor of the first user agent UA1 is inserted into the payload of the further signaling message "ACK". Then, the first call server PS1 sends the modified further signaling message "ACK" via the first and second FW/NA(P)T-devices NA(P)T1 and NA(P)T2 and the second call server PS2 to the second user agent UA2. The SDP descriptor is allowed in the further signaling message "ACK" if there was no SDP descriptor in the first signaling message "INVITE". For that reason - as described above - the SDP descriptor is removed by the first call server PS1 before sending the first signaling message "INVITE" to the second user agent UA2, i.e. after receiving SIP1 and before sending SIP2. This is referred to as delayed Session Description Protocol (SDP) .

The second call server PS2 intercepts the further signaling message "ACK" and replaces the private or local information (IP110/ UDP1000) of the first user agent UA1 contained in the payload of the further signaling message "ACK" with the explored public information, i.e. the public SDP descriptor (IP210/ UDP2000), for the first user agent UA1. The modified further signaling message "ACK" with the public SDP of the first user agent UA1 is forwarded to the second user agent UA2, which can properly interpret the modified signaling message.

Now the first and second user agents UA1 and UA2 can start Real-Time Transport Protocol (RTP)-traffic. The data transmission connection which was built up in the above-described way, can be used for various applications, for example multi-media-data-exchange- and Voice-over-IP-applications (VoIP). In the case of VoIP-applications, the data transmission connection could be built up by means of SIP signaling messages. The user agents could be SIP-phones.

If necessary, explored Real-Time Transport Control Protocol (RTCP)-binding information can be inserted at the call servers PS1 and PS2 in the same way as is done with the RTP-binding information. The method to explore FW/NA(P)T-device (NA(P)T)-bindings as described above also works very well with cascaded NA(P)T-devices, as shown in figure 2. This means that it is possible to explore the NA(P)T-bindings for two or more NA(P)T-devices in series, if each IP domain (e.g. private domain 1, private domain 2 and private domain 3) with a NA(P)T-device has its own call server (e.g. SIP proxy server) PS1, PS2, PS3. In Figure 2, private domain 1 could correspond to a private company IP network, private domain 2 could correspond to an Internet service provider with private addresses, too, because of scarce IPv4 public addresses.

As mentioned before, each IP-domain with a NA(P)T-device needs its own call server, so each NA(P)T-device knows about the "public" IP-addresses behind the NA(P)T-device. This means, the first call server PS1 registers at the second call server PS2 and gets the "public" IP-address IP210, the second call server PS2 registers at the Domain Name Service (DNS) and receives the public IP-address IP410. The first and second call server PS1 and PS2 can use these IP-addresses (IP210 and IP410) for the exploration method described above.

The NA(P)T can also incorporate a firewall functionality. In that case, the NA(P)T would be referred to as a Firewall Network Address (and Port) Translation device (FW/NA(P)T). Of course, when building up data transmission connections between two user agents disposed within the same private domain, the signaling messages would probably not be transmitted across the FW/NA(P)T-device and the network, but would rather remain within the realm of the private domain. It would not be necessary to make use of the present invention to initiate a data transmission connection between two user agents of the same private domain, because SIP-signaling would work well without, too. However, the present invention would also work very well if both user agents were disposed within the same private domain and the signaling messages were sent across the FW/NA(P)T-device and the network. In that case, the first and second private domain described above would be the same private domain and the first and second call servers would be the same device. Also, the first and second FW/NA(P)T-devices would be the same device. Both user agents UA1 and UA2 would be connected to the same call server PS and to the same NA(P)T-device.

The present invention suggests an easy way to explore NA(P)T-binding information without the need for additional equipment (servers) or the requirement to upgrade or exchange a large number of already installed NA(P)T-devices, as other approaches require. The main advantages are the following:

- No replacement of prevalent NA(P)T-devices;
- No specific intelligence for Traversal Using Relay Network Address Translation (TURN) or Simple Traversal of User Datagram Protocol (STUN) necessary in user agents. This makes development and deployment much easier because no standardization and stabilization of all these methods has to be considered.
- Many different types of NA(P)T-functionalities are covered.
- Just the central network or proxy servers (e.g. SIP proxy servers) acting behind the NA(P)T-devices have to be extended in order to incorporate the NA(P)T-exploration functionality described above. This can be done by simply extending the SIP standard for the additional SIP proxy server functionality "NA(P)T-exploration".
- The present invention works very well with cascaded NA(P)T-devices, too.

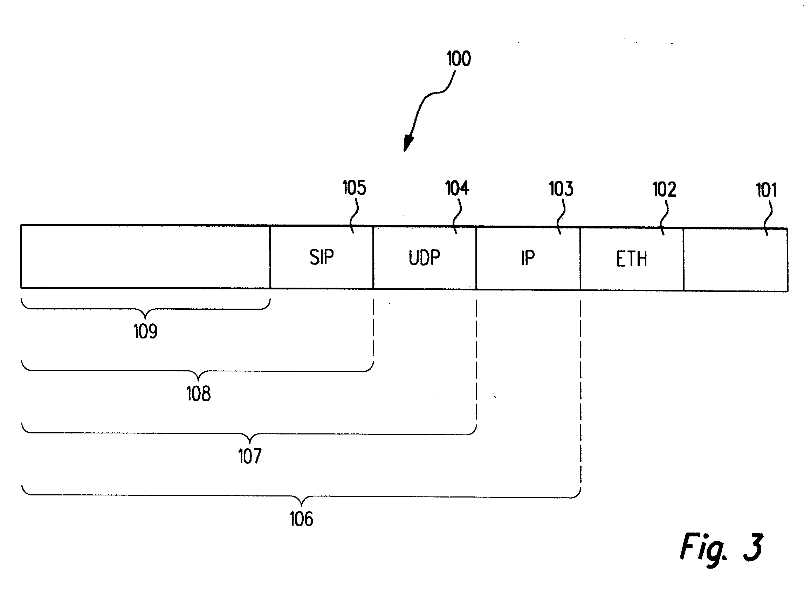

Figure 3 shows a preferred embodiment of the signaling messages, which are exchanged within the call-based environments of figure 2 or 3 for initiating the communication link. The signaling message 100 shown in figure 3 comprises headers and payload of various OSI-layers nested into one another. The header of OSI-layer 1 has the reference number 101. In the example shown, OSI-layer 2 comprises an Ethernet-environment. The header of OSI-layer 2 has the reference number 102. In the example shown, OSI-layer 3 comprises an IP-environment. The header of OSI-layer 3 has the reference number 103. In the example shown, OSI-layer 4 comprises an UDP-environment. The header of OSI-layer 4 has the reference number 104. In the example shown, OSI-layer 5 comprises an SIP-environment. The header of OSI-layer 5 has the reference number 105.

The payload of OSI-layer 5 has the reference number 109 and comprises, for example, information concerning the local or private IP-address and UDP-port of the calling user agent. The header 105 of OSI-layer 5 comprises, for example, information concerning the calling user agent (e.g. 'from') and concerning the user agent to be called (e.g. 'to') or media-session-information.

The payload of OSI-layer 4 has the reference number 108 and comprises the header 105 and the payload 109 of the OSI-layer 5. The header 104 of OSI-layer 4 comprises, for example, UDP-ports or other information concerning the calling user agent and concerning the user agent to be called. The payload of OSI-layer 3 has the reference number 107 and comprises the header 104 and the payload 108 of the OSI-layer 4. The header 103 of OSI-layer 3 comprises, for example, IP-addresses or other information concerning the calling user agent and concerning the user agent to be called. The payload of OSI-layer 2 has the reference number 106 and comprises the header 103 and the payload 107 of the OSI-layer 3. The header 102 of OSI-layer 2 comprises, for example, Media Access Control (MAC)-addresses or other information concerning the calling user agent and concerning the user agent to be called.

Standard NA(P)T-devices only translate the source and destination addresses and ports of the layer 3 and layer 4 part of the signaling message 100. The destination addresses and ports of the layer 5 part of the signaling message 100 remain unaffected by the translation process accomplished by the NA(P)T-devices. This has the disadvantage that, for example, the build-up of a communication link by means of layer 5 (e.g. SIP) signaling messages will not work if the communication link runs across standard NA(P)T-devices. The present invention suggests an easy, convenient and low-cost way for performing a layer 5 (e.g. SIP)-awareness of standard NA(P)T-devices. This enables build-up of a communication link running across standard NA(P)T-devices by means of layer 5 (e.g. SIP) signaling messages.

The exploration messages for exploring the bindings of the NA(P)T-devices for two unidirectional RTP media channels (RTP1 and RTP2), for example UDP (SIP)-messages, are described by way of example in more detail below:

| E11: | Header: | IP-SA/ UDP-SP: IP110/ UDP1000 |
| | | IP-DA/ UDP_DP: IP220/ UDP5060 |
| | Payload: | SDP: IP110/ UDP1000 |
| E12: | Header: | IP-SA/ UDP-SP: IP210/ UDP2000 |
| | | IP-DA/ UDP_DP: IP220/ UDP5060 |
| | Payload: | SDP: IP110/ UDP1000 |
| E13: | Header: | IP-SA/ UDP-SP: IP210/ UDP2000 |
| | | IP-DA/ UDP_DP: IP320/ UDP5060 |
| | Payload: | SDP: IP110/ UDP1000 |
| E14: | Header: | IP-SA/ UDP-SP: IP310/ UDP9000 |
| | | IP-DA/ UDP_DP: IP210/ UDP5060 |
| | Payload: | SDP: IP310/ UDP9000 |
| E15: | Header: | IP-SA/ UDP-SP: IP220/ UDP8000 |
| | | IP-DA/ UDP_DP: IP210/ UDP5060 |
| | Payload: | SDP: IP310/ UDP9000 |
| E16: | Header: | IP-SA/ UDP-SP: IP220/ UDP8000 |
| | | IP-DA/ UDP_DP: IP120/ UDP5060 |
| | Payload: | SDP: IP310/ UDP9000 |

**Claims**

1. Method for establishing a bi-directional peer-to-peer communication link between at least two user agents (UA1, UA2) within a call-based environment by means of signaling messages (100) to be exchanged between the at least two user agents (UA1, UA2), the communication link to be established across a network and at least one network address translation device (NAT1, NAT2) connected to the network, the network address translation devices (NAT1, NAT2) translating private identifiers of the user agents (UA1, UA2) into corresponding public identifiers usable in the network and vice versa, **characterized in that** before the communication link is established, explore messages are transmitted across the network via the at least one network address translation device (NAT1, NAT2), translation information for the at least one network address translation device (NAT1, NAT2) is extracted from the explore messages, the content of the signaling messages (100) is modified according to the translation information, and the communication link is established by means of the modified signaling messages.

2. Method according to claim 1, **characterized in that** the call-based environment comprises at least two call servers (PS1, PS2), each assigned to one of the at least two user agents (UA1, UA2), and that the explore messages are exchanged between the call servers (PS1, PS2).

3. Method according to claim 2, **characterized in that** a call server (PS1; PS2) after receiving an explore message extracts translation information for at least one of the network address translation devices (NAT1, NAT2) from the explore message.

4. Method according to one of the preceding claims, **characterized in that** the explore messages in their headers comprise identifiers that will be translated by the network address translation devices (NAT1, NAT2) upon transmission across the network address translation devices (NAT1, NAT2), in their payloads comprise the same untranslated identifiers, and that the translation information for at least one of the network address translation devices (NAT1, NAT2) is determined on the basis of the untranslated and translated identifiers contained in the explore message.

5. Method according to claim 4, **characterized in that** the explore messages in their headers and their payload comprise identifiers (IP-SA, UDP-SP) for at least one of the user agents (UA1, UA2).

6. Method according to one of the preceding claims 2 to 5, **characterized in that** the identifiers that will be translated by the network address translation devices (NAT1, NAT2) upon transmission are additionally inserted into the payload of the explore messages by the call servers (PS1, PS2) as information on the alleged sender of the explore messages.

7. Method according to one of the preceding claims, **characterized in that** the signaling messages (100) and the explore messages are in the Session Initiation Protocol (SIP)-format.

8. Call server (PS1; PS2) for establishing a bi-directional peer-to-peer communication link between at least two user agents (UA1, UA2) within a call-based environment by means of signaling messages (100) to be exchanged between the at least two user agents (UA1, UA2), the communication link to be established across a network and at least one network address translation device (NAT1, NAT2) connected to the network, the network address translation devices (NAT1, NAT2) translating private identifiers of the user agents (UA1, UA2) into corresponding public identifiers usable in the network and vice versa, **characterized in that** the call server (PS1; PS2) comprises:

   - means for transmitting explore messages across the network via the at least one network address translation device (NAT1, NAT2),
   - means for receiving explore messages,
   - means for extracting translation information for the at least one network address translation device (NAT1, NAT2) from received explore messages,
   - means for modifying the content of signaling messages (100) according to the translation information, and
   - means for forwarding the modified signaling messages for establishing the communication link.

9. Call server (PS1; PS2) according to claim 8, **characterized in that** the call server (PS1; PS2) further comprises:

   - means for inserting identifiers into the headers and the payload of the explore messages before they are transmitted across the network, the identifiers of an explore message adapted for being translated by a network address translation device (NAT1, NAT2) when the explore message is transmitted via the network address translation device (NAT1, NAT2).

10. Call server (PS1; PS2) according to claim 9, **characterized in that** the identifiers to be inserted into the headers and the payload of the explore messages are identifiers (IP-SA, UDP-SP) for at least one of the user agents (UA1, UA2).

11. Call server (PS1; PS2) according to claim 9 or 10, **characterized in that** the call server (PS1; PS2) further comprises:

- means for determining the translation information for the at least one network address translation device (NAT1, NAT2) from the identifiers before and after translation by the network address translation device (NAT1, NAT2) and both contained in the received explore messages.

12. Call server (PS1; PS2) according to one of the preceding claims 8 to 11, **characterized in that** the call server (PS1; PS2) further comprises:

- means for receiving and retaining signaling messages (100) directed from one of the at least two user agents (UA1; UA2) to another one of the at least two user agents (UA2; UA1),
- means for modifying the content of these signaling messages (100) according to the translation information, and
- means for forwarding these modified signaling messages (100) to the other one of the at least two user agents (UA2; UA1) for establishing the communication link.

**Amended claims in accordance with Rule 86(2) EPC.**

**1.** Method for establishing a bi-directional peer-to-peer communication link between at least two user agents (UA1, UA2) within a call-based environment by means of signaling messages (100) to be exchanged between the at least two user agents (UA1, UA2), the call-based environment comprising at least two call servers (PS1, PS2), the communication link to be established across a network and at least one network address translation device (NAT1, NAT2) connected to the network, the at least one network address translation device (NAT1, NAT2) each translating private identifiers of one of the user agents (UA1, UA2) into corresponding public identifiers usable in the network and vice versa, the method comprising the following steps:

- before the communication link is established, transmitting explore messages across the network via the at least one network address translation device (NAT1, NAT2),
- extracting translation information for the at least one network address translation device (NAT1, NAT2) from received explore messages,
- modifying the content of the signaling messages (100) according to the translation information,
- forwarding the modified signaling messages for establishing the communication link, and
- establishing the communication link by means of the modified signaling messages,

**characterized in that**

- signaling messages (100) directed from one of the at least two user agents (UA1; UA2) to another one of the at least two user agents (UA2; UA1) are received and retained by one of the call servers (PS1; PS2);
- the content of the signaling messages (100) are modified by said one of the call servers (PS1; PS2); and
- the modified signaling messages are forwarded to the other one of the at least two user agents (UA2; UA1) by said one of the call servers (PS1; PS2) for establishing the communication link.

**2.** Method according to claim 1, **characterized in that** each of the at least two call servers (PS1, PS2) is assigned to one of the at least two user agents (UA1, UA2), and that the explore messages are exchanged between the call servers (PS1, PS2).

**3.** Method according to claim 2, **characterized in that** a call server (PS1; PS2) after receiving an explore message extracts the translation information for at least one of the network address translation devices (NAT1, NAT2) from the explore message.

**4.** Method according to one of the preceding claims, **characterized in that** the explore messages in their headers comprise identifiers that will be translated by the network address translation devices (NAT1, NAT2) upon transmission across the network address translation devices (NAT1, NAT2), in their payloads comprise the same untranslated identifiers, and that the translation information for at least one of the network address translation devices (NAT1, NAT2) is determined on the basis of the untranslated and translated identifiers contained in the explore message.

**5.** Method according to claim 4, **characterized in that** the explore messages in their headers and their payload comprise identifiers (IP-SA, UDP-SP) for at least one of the user agents (UA1, UA2).

**6.** Method according to one of the preceding claims 2 to 5,
**characterized in that** the identifiers that will be translated by the network address translation devices (NAT1, NAT2) upon transmission are additionally inserted into the payload of the explore messages by the call servers (PS1, PS2) as information on the alleged sender of the explore messages.

**7.** Method according to one of the preceding claims,
**characterized in that** the signaling messages (100) and the explore messages are in the Session Initiation Protocol (SIP)-format.

**8.** Call server (PS1; PS2) for establishing a bi-directional peer-to-peer communication link between at least two user agents (UA1, UA2) within a call-based environment by means of signaling messages (100) to be exchanged between the at least two user agents (UA1, UA2), the communication link to be established across a network and at least one network address translation device (NAT1, NAT2) connected to the network, the at least one network address translation device (NAT1, NAT2) each translating private identifiers of one of the user agents (UA1, UA2) into corresponding public identifiers usable in the network and vice versa, the call server (PS1; PS2) comprising:

- means for transmitting explore messages across the network via the at least one network address translation device (NAT1, NAT2),
- means for receiving explore messages,
- means for extracting translation information for the at least one network address translation device (NAT1, NAT2) from received explore messages,
- means for modifying the content of the signaling messages (100) according to the translation information, and
- means for forwarding the modified signaling messages for establishing the communication link,

**characterized in that** the call server (PS1; PS2) further comprises:

- means for receiving and retaining signaling messages (100) directed from one of the at least two user agents (UA1; UA2) to another one of the at least two user agents (UA2; UA1),
- means for modifying the content of the signaling messages (100) according to the translation information, and
- means for forwarding these modified signaling messages to the other one of the at least two user agents (UA2; UA1) for establishing the communication link.

**9.** Call server (PS1; PS2) according to claim 8,
**characterized in that** the call server (PS1; PS2) further comprises:

- means for inserting identifiers into the headers and the payload of the explore messages before they are transmitted across the network, the identifiers of an explore message adapted for being translated by a network address translation device (NAT1, NAT2) when the explore message is transmitted via the network address translation device (NAT1, NAT2).

**10.** Call server (PS1; PS2) according to claim 9,
**characterized in that** the identifiers to be inserted into the headers and the payload of the explore messages are identifiers (IP-SA, UDP-SP) for at least one of the user agents (UA1, UA2).

**11.** Call server (PS1; PS2) according to claim 9 or 10,
**characterized in that** the call server (PS1; PS2) further comprises:

- means for determining the translation information for the at least one network address translation device (NAT1, NAT2) from the identifiers before and after translation by the network address translation device (NAT1, NAT2) and both contained in the received explore messages.

Fig. 1

1
IP 100

4
IP 200

2
IP 300

IP 120

IP 320

PS1
UDP5060

PS2
UDP5060

SIP2
E11

SIP4
E13

IP 110

SIP1
SIP10

SIP9
E16

IP 130 | IP 210

IP 220 | IP 330

SIP5

SIP6

IP 310

UA1
UDP1000

NAT1
UDP5060
UDP2000

SIP3 — E12
SIP8 — E15

NAT2
UDP5060
UDP8000

SIP7
E14

UA2
UDP9000

RTP1
RTP2
RTCP

RTP1
RTP2
RTCP

RTP1
RTP2
RTCP

EP 1 613 024 A1

12

1
IP 100

2
IP 200

4
IP 400

3
IP 300

IP 120

IP 220

PS1

PS2

PS3

SIP SIP SIP SIP

IP 210 SIP SIP

IP 410

SIP SIP

SIP SIP

UA1

NAT1

SIP
SIP

NAT2

NAT3

UA2

RTP1
RTP2
RTCP

RTP1
RTP2
RTCP

RTP1
RTP2
RTCP

RTP1
RTP2
RTCP

*Fig. 2*

Fig. 3

European Patent
Office

**EUROPEAN SEARCH REPORT**

Application Number

EP 04 29 1647

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ROSENBERG J, MAHY R , SEN S: "NAT AND FIREWALL SCENARIOS AND SOLUTIONS FOR SIP" NAT AND FIREWALL SCENARIOS AND SOLUTIONS FOR SIP, [Online] 24 June 2002 (2002-06-24), XP015003441 USA Retrieved from the Internet: URL:http://www.rnp.br/ietf/internet-drafts /draft-ietf-sipping-nat-scenarios-00.txt> [retrieved on 2004-12-09] | 1,8 | H04L29/12 H04L29/06 |
| Y | * paragraphs [02.3] - [2.3.3]; figures 11-13,15 * ----- | 2-7,9-11 | |
| Y | US 2004/037268 A1 (READ STEPHEN MICHAEL) 26 February 2004 (2004-02-26) * paragraphs [0081] - [0083] * ----- | 2-7,9-11 | |
| A | ROSENBERG J,WEINBERGER J,HUITEMA C,MAHY R: "RFC 3489 STUN SIMPLE TRAVERSAL OF USER DATAGRAM PROTOCOL  UDP THROUGH NETWORK ADDRESS TRANSLATORS NATS" RFC 3489 STUN SIMPLE TRAVERSAL OF USER DATAGRAM PROTOCOL  UDP THROUGH NETWORK ADDRESS TRANSLATORS NATS, [Online] 1 March 2003 (2003-03-01), pages 1-47, XP002309234 USA Retrieved from the Internet: URL:http://www.faqs.org/ftp/rfc/pdf/rfc348 9.txt.pdf> [retrieved on 2005-12-06] * the whole document * ----- -/-- | 1,8 | TECHNICAL FIELDS SEARCHED (Int.Cl.7) H04L |

The present search report has been drawn up for all claims

| Place of search | Date of completion of the search | Examiner |
|---|---|---|
| The Hague | 9 December 2004 | Dupuis, H |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                 
& : member of the same patent family, corresponding
    document

EPO FORM 1503 03.82 (P04C01)

**European Patent Office**

**EUROPEAN SEARCH REPORT**

Application Number

EP 04 29 1647

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ROSENBERG J, WEINBERGER J, HUITEMA C,MAHY R: "EXAMPLES OF NETWORK ADDRESS TRANSLATION NAT AND FIREWALL TRAVERSAL FOR THE SESSION INITIATION PROTOCOL" EXAMPLES OF NETWORK ADDRESS TRANSLATION NAT AND FIREWALL TRAVERSAL FOR THE SESSION INITIATION PROTOCOL, [Online] 4 December 2003 (2003-12-04), XP002309565 USA Retrieved from the Internet: URL:http://www.jdrosen.net/papers/draft-rosenberg-sipping-nat-scenarios-02.html> [retrieved on 2005-12-08] * the whole document * ----- | 1,8 | |
| | | | **TECHNICAL FIELDS SEARCHED (Int.Cl.7)** |

The present search report has been drawn up for all claims

| Place of search | Date of completion of the search | Examiner |
|---|---|---|
| The Hague | 9 December 2004 | Dupuis, H |

EPO FORM 1503 03.82 (P04C01)

## ANNEX TO THE EUROPEAN SEARCH REPORT
## ON EUROPEAN PATENT APPLICATION NO.

EP 04 29 1647

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2004

| Patent document cited in search report | Publication date | Patent family member(s) | | Publication date |
|---|---|---|---|---|
| US 2004037268    A1 | 26-02-2004 | GB | 2365256 A | 13-02-2002 |
| | | AU | 7569701 A | 13-02-2002 |
| | | CA | 2415357 A1 | 07-02-2002 |
| | | CN | 1444815 T | 24-09-2003 |
| | | EP | 1305927 A1 | 02-05-2003 |
| | | WO | 0211400 A1 | 07-02-2002 |
| | | JP | 2004505552 T | 19-02-2004 |

EPO FORM P0459

For more details about this annex : see Official Journal of the European Patent Office, No. 12/82